# EUROPÄISCHE PATENTSCHRIFT

(11) **EP 0 284 902 B1**
(45) Veröffentlichungstag und Bekanntmachung des Hinweises auf die Patenterteilung: **21.07.1993**
(21) Anmeldenummer: 88104218.8
(22) Anmeldetag: 17.03.1988
(51) Int. Cl.: B21D 39/03

(54) **Verfahren und Vorrichtung zum Verbinden aufeinanderliegender dünner Platten**
Method and apparatus to join thin plates lying one on top of the other together
Procédé et dispositif pour joindre des tôles minces mises les unes sur les autres

(30) Priorität: 01.04.1987 DE 3710929
(43) Veröffentlichungstag der Anmeldung: 05.10.1988
(73) Patentinhaber: RAPP, Eugen, D-88276 Berg (DE)
(72) Erfinder: RAPP, Eugen, D-88276 Berg (DE)
(74) Vertreter: Schuster, Gregor, Dipl.-Ing.

(56) Entgegenhaltungen:
- GB-A- 2 069 394
- US-A- 3 359 935
- US-A- 3 771 216

## Beschreibung

Die Erfindung geht aus von einem Verfahren zum Verbinden aufeinanderliegender dünner Platten (insbesondere Bleche) nach der Gattung des Hauptanspruchs sowie von Vorrichtungen zur Durchführung dieses Verfahrens nach der Gattung des Anspruchs 4 oder 5.

Diese gattungsgemäße Verbindungstechnik weist eine vielfältige Anwendung auf, da sie ohne zusätzliche Hilfsfügeteile, wie Nieten, Schrauben und dgl., auskommt, ohne daß deshalb die Verbindungsqualität schlechter wäre. Derartige Verbindungen sind nicht nur erheblichen Zugkräften, sondern auch Scherkräften aussetzbar und weisen neben der Kraftschlüssigkeit stets eine Formschlüssigkeit an der Verbindungsstelle zwischen den Platten auf, wobei trotz aller Vorteile ein Nachteil bestehen bleibt, daß nämlich die durch das Fügeelement gebildete Blechwarze aus der Plattenebene herausragt, so daß diese Art von Verbindungstechnik nicht überall einsetzbar ist. An diesen Blechwarzen können andere Gegenstände hängenbleiben bzw. sie stellen ungewünschte Erhebungen beispielsweise an zu lackierenden Teilen dar.

Bei einem bekannten Verfahren bzw. einer bekannten Vorrichtung gattungsgemäßer Art nach Anspruch 4 und Anspruch 5, weist die Matritze einen beweglichen Boden auf, der beim Tiefziehvorgang bis an einen Anschlag verschoben wird, wonach bei Fortsetzung der Arbeitsbewegung des Stempels, der eigentliche Quetschvorgang beginnt. Auf einer der Oberflächen der miteinander verbundenen Platten ragen die Blechwarzen hervor (US-A-3 771 216).

Ein anderes bekanntes Verfahren (US-A-3 934 327) stellt Stanznocken her, in dem nach einem Tiefzieh- und Stanzvorgang sich eine Quetschbearbeitung anschließt, wobei das den Platten nähere Plattenstück durch Quetschen verbreitert wird und mit seinen Rändern die Platten hintergreift (Clinchen). Damit die Blechwarze möglichst wenig aus der Plattenebene herausragt, wird durch zusätzliche Preßwerkzeuge in die Platten eine Mulde eingeprägt, innerhalb welcher dann der Stanznocken gebildet wird, so daß dessen Fügeteile nur unwesentlich über diese Mulde herausragen. Der Nachteil besteht allerdings darin, daß nun auf beiden Seiten der zu verbindenden Platten Erhebungen vorhanden sind, so daß das eingangs genannte Problem nicht behoben, sondern nur verlagert ist.

Bei einem anderen bekannten Verfahren mit entsprechender Vorrichtung (DE-A-35 32 900) steht für das Fügeelement, soweit es aus der Plattenebene herausragt, nur ein begrenztes Volumen zur Verfügung, welches durch die Größe einer Sacköffnung im Gesenk bestimmt wird. Durch dieses Verfahren wird zwar eine feste Verbindung bei nur geringem Herausragen der Blechwarze erreicht mit wenigstens einer glatten Plattenseite, es verbleibt jedoch der Nachteil dieser Fügeelementnoppen.

### Vorteile der Erfindung

Das erfindungsgemäße Verfahren mit den Merkmalen des Hauptanspruchs und die erfindungsgemäßen Vorrichtungen haben demgegenüber den Vorteil, daß nach dem Verbinden der Platten keine aus der Plattenebene herausragenden Teile, wie Blechwarzen, vorhanden sind, wobei die verbleibenden Sacköffnungen auf der Plattenfläche, auf der der Stempel eingesetzt wurde, kleiner als bei den bekannten Verfahren sind, außerdem aber untergeordneter Bedeutung sind. Durch Einsatz der Erfindung kann somit diese Verbindungstechnik in weit größerem umfang eingesetzt werden, ohne daß deshalb damit eine wesentliche Verteuerung verbunden ist. Ein wesentlicher und vor allem überraschender Vorteil der Erfindung besteht darin, daß durch die zusätzliche Materialverformung im Fügeelement eine erhebliche Steigerung der Festigkeit, besonders auf Scherung, erreicht wird, die bis zu 100 % im Vergleich zu einer unplanierten Verbindung gehen kann. Außerdem wird auch die dynamische Festigkeit verbessert. Der zusätzliche Aufwand beim Einsatz der Erfindung, beispielsweise durch ein Mehrplatzsystem oder beim Einplatzsystem durch eine Veränderung der Werkzeuge, tritt im Vergleich zu den gewonnenen Vorteilen in den meisten Fällen in den Hintergrund, auch wenn es sich um ein bereits sehr durchrationalisiertes Verfahren handelt, wie es als bekannt oben beschrieben ist.

Die Vorrichtung mit den Merkmalen des Anspruches 4 greift auf Erfahrungen zurück, wie sie seit langem in dieser Verbindungstechnik bekannt sind (US-A-3 771 216), nämlich auf zweiteilige Werkzeuge mit einer Matritze, deren Boden verschiebbar ist und einerseits als Gesenkboden dient und andererseits erfindungsgemäß beim Planiervorgang als Stempelboden dient. Grundsätzlich gleiches gilt für den eigentlichen Stempel, der zu Beginn des Fügevorgangs seine Stempelfunktion wahrnimmt und dann beim Planiervorgang durch leichtes Zurückfahren als Kalibrierstempel wirkt. Natürlich kann das den eigentlichen Stempel umgebende Führungsteil, beispielsweise eine Buchse bereits zu Beginn des Tiefzieh- oder auch Stanzvorgangs auf die Platten gefahren werden, um diese gemeinsam mit dem Matritzenwerkzeug festzuspannen.

Nach einer Ausgestaltung der erfindungsgemäßen Vorrichtung mit einem eine den Platten zugewandte Schulter aufweisenden und den Formstempel angeordneten Führungsteil, in welchem der Formstempel axial in der Arbeitsrichtung geführt ist, wobei beim Planieren die Schulter auf den Platten aufliegt, stützt sich der Formstempel über ein elastisches Material (Feder) rückseitig am Führungsteil ab, wobei dieses elastische Material beim Planieren nachgibt. Der Stempel ist also im Führungsteil in Kraftrichtung nachgiebig gelagert, wobei die Nachgiebigkeit erst bei der Planierkraft zur Auswirkung kommt, so daß beim Tiefzieh- und auch Quetschvorgang der Stempel im Führungsteil in seiner Stellung relativ zu diesem verharrt und erst, wenn die starke Planierkraft von der Matritzenseite her auftritt, nachgibt, um ausreichend Platz für das weggequetsche Material zur Verfügung zu stellen.

Die erfindungsgemäße Vorrichtung mit den Merkmalen des Anspruchs 5 hat gegenüber den bekannten Vorrichtungen den Vorteil, daß ein verhältnismäßig geringer zusätzlicher Werkzeugaufwand erforderlich ist und daß einfache Werkzeuge einsetzbar sind, was sich vor allem auf die Lebensdauer dieser Werkzeuge auswirkt.

Weitere Vorteile und vorteilhafte Ausgestaltungen der Erfindung sind der nachfolgenden Beschreibung, der Zeichnung und den Ansprüchen entnehmbar.

Drei Ausführungsbeispiele des Gegenstandes der Erfindung sind in der Zeichnung dargestellt und werden im folgenden näher beschrieben. Es zeigen
- Fig. 1 bis 5: das erste Ausführungsbeispiel mit einem einen runden Fügepunkt erzeugende Werkzeug im Längsschnitt und in fünf verschiedenen Arbeitsstellungen einer Arbeitsstation,
- Fig. 6: eine Ausgestaltung des Stempels dieses Werkzeugs,
- Fig. 7: das zweite Ausführungsbeispiel im Längsschnitt in Endstellung des Werkzeugs bei einem Mehrarbeitsplatzverfahren und

### Beschreibung der Ausführungsbeispiele

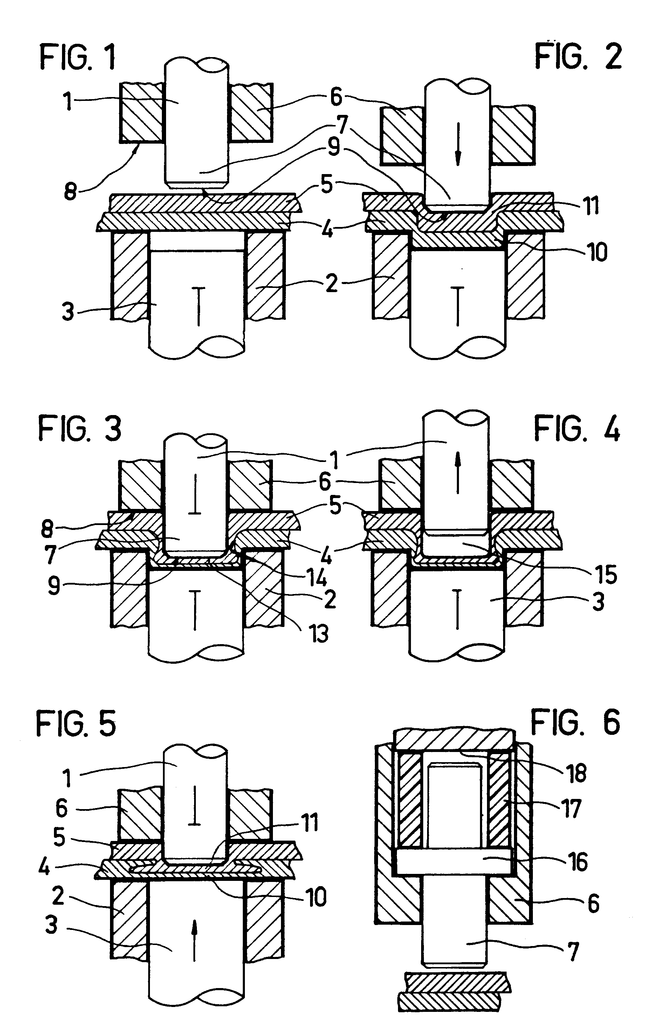

In den Figuren 1 bis 6 ist das erste Ausführungsbeispiel gezeigt als Werkzeugbeispiel, wobei nur das eigentliche Herstellungswerkzeug in fünf verschiedenen Arbeitsstellungen sowie die zu verbindenden Platten dargestellt sind. Natürlich gehört zur Vollständigkeit der Erfindung auch die Pressvorrichtung, die in unterschiedlichster Weise gestaltet sein kann und durch die für die Durchführung der Verbindung das Werkzeug betätigt werden muß.

Das Werkzeug besteht aus einem Stempel 1 einer Matritze 2 und einem als Amboß 3 ausgebildeten beweglicher Boden, der relativ zur Matritze 2 verschiebbar ist. Zwischen dem Stempel 1 und der Matritze 2 sind die zu verbindenden Platten vorhanden, eine untere Platte 4 und eine obere Platte 5. Bei diesen Platten handelt es sich meist um Bleche, wobei natürlich auch mehr als zwei derartige Bleche miteinander verbunden werden können.

Um den Stempel 1 ist eine Buchse 6 (Führungsteil) angeordnet, die relativ zum Stempel 1 verschiebbar ist. Aus der Buchse 6 heraus ragt ein entsprechend in der Länge änderbarer Arbeitszapfen 7. Der oberen Platte 5 ist die Schulter 8 der Buchse 6 zugewandt sowie die Stirnfläche 9 des Arbeitszapfens 7.

In Fig. 2 ist der erste Teil des Arbeitsvorgangs, nämlich das Tiefziehen beendet, bei dem der Arbeitszapfen 7 die seiner freien Stirnfläche 9 vorgelagerten Plattenanteile 10 und 11 der beiden Platten 4 und 5 zu einer Sacköffnung tiefgezogen hat. Hierbei entsteht eine topfartige Verbindung zwischen den in der ursprünglichen Lage verbleibenden Platten und den tiefgezogenen Plattenanteilen 10 und 11 mit einer entsprechenden Verdünnung des Materials dieser Anteile, ohne daß deshalb ein Ineinanderhaken der Platten 4 und 5 bewirkt wurde.

In Fig. 3 nimmt der Formstempel 1 seine Endlage ein, in der die tiefgezogenen Plattenanteile 10 und 11 bereits gequetscht wurden. In dieser Stellung liegt die Schulter 8 an der Oberfläche der Platte 5 an. Die der Stirnfläche 9 gegenüberliegenden Plattenanteile sind durch den Widerstand des Amboß 3 und der begrenzenden Matritze 2 stark zusammengepreßt, wobei das Material radial nach außen verdrängt wurde. Aufgrund der Quetschwirkung wurden die tiefgezogenen Plattenanteile so weit zu einem hier horizontal dargestellten Quetschteil radial ausgedehnt, daß dieser hinter die Tiefziehöffnung 14 der unteren Platte 4 greift. Bereits nach diesem Arbeitsschritt ist eine formschlüssige äußerst feste Verbindung durch ein Ineinanderfließen des Plattenmaterials erzielt.

In Fig. 4 ist der Formstempel 1 innerhalb der Buchse 6 leicht nach oben gezogen, so daß ein Hohlraum 15 entsteht.

In Fig. 5 nimmt das Werkzeug die Endstellung nach einem Planiervorgang der beiden Plattenanteile 10 und 11 also der gesamten Bearbeitung ein, bei der der Amboß 3 bis in die Ebene der Platten 4 und 5 nach oben geschoben wurde und dadurch die tiefgezogenen Anteile 10, 11 in die Plattenebene verdrängt hat. Das dabei verdrängte Material füllt den vorher gebildeten Hohlraum 15 aus, wobei der Formstempel 1 als Kalibrierstempel fungiert und die Buchse 6 als Widerstandslager.

Natürlich ist auch denkbar, daß bei diesem, in den Figuren 4 und 5 dargestellten, Planiervorgang zuerst die Matritze 2 mit ihrer Stirnfläche bis auf die Stirnflächenebene des Amboß 3 zurückgefahren wird, um danach einen gemeinsamen flachen Preßstempel bildend für das Planieren wieder in Richtung Formstempel 1 bzw. Buchse 6 zum Planieren verschoben zu werden.

In Fig. 6 ist eine Ausgestaltung von Buchse 6 und Planierstempel 7 dargestellt, in dem sich der Planierstempel 7 über einen Bund 16 an einem elastischen Material 17, beispielsweise einer Feder, abstützt und wobei sein Hub durch einen Anschlag 18 begrenzt ist. Dieses elastische Material 17 ist so ausgebildet, daß es beim Tiefzieh- und Quetschvorgang nicht nachgibt, sondern erst beim Planiervorgang, des heißt beim Verschieben des Amboß 3 in Richtung Platten 4, 5. Hierdurch wird ein extra, den Formstempel 7 innerhalb der Buchse 6 betätigendes Werkzeug eingespart.

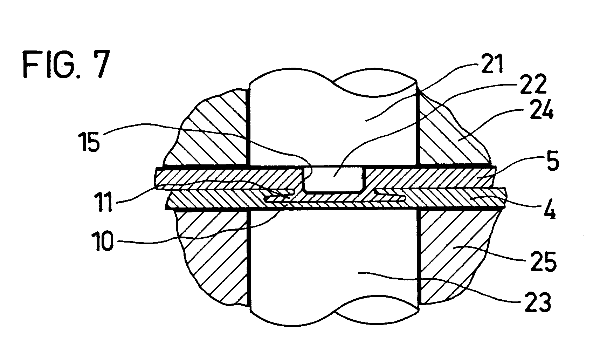

In Fig. 7 ist ein zweites Ausführungsbeispiel dargestellt, bei dem der Planiervorgang an einem separaten Arbeitsplatz durchgeführt wird. Am ersten Arbeitsplatz werden die, in den Fig. 1 bis 3 gezeigten Schritte durchgeführt, während hier am separaten Arbeitsplatz nur der in Fig. 5 gezeigte Planiervorgang für sich durchgeführt wird. Hierfür ist ein spezieller Kalibrierstempel 21 vorhanden, mit einem Kalibrierzapfen 22 und es ist ein extra Planierstempel 23 vorgesehen, wobei durch Haltevorrichtungen 24 und 25 die Platten 4 und 5 eingespannt werden. Da die Platten bereits durch das Fügeelement miteinander verbunden waren, dienen diese Haltevorrichtungen 24 und 25 vor allem dazu, ein exaktes Einfahren des Kalibrierstempels 21 in die vorhandene Sacköffnung 15 zu bewirken. Der Durchmesser des Planierstempels 23 ist in jedem Fall so groß, daß er die durch das Fügen gebildete Blechwarze bzw. die gezogenen Plattenanteile 10 und 11 überdeckt.

## Patentansprüche

1. Verfahren zum Verbinden aufeinanderliegender dünner platten (4, 5) verformbaren Materials, insbesondere Bleche, bei denen flächig übereinanderliegende Plattenanteile (10, 11) zur Bildung eines Fügeelements folgenden Verfahrensschritten unterworfen werden:
a) Tiefziehen der Plattenanteile (10, 11) aus der Plattenebene mittels eines Stempels (1) und einer Matritze (2), bis von der Eindringseite her der Stempel (1) mindestens die erste Platte (5), längstens die letzte Platte (4) durchdrungen hat,
b) Quetschen der Plattenanteile (10, 11), wobei mindestens die dem Stempel (1) zugewandte Fläche eines der Plattenanteile (11) breit gequetscht wird und dadurch eine größere Querabmessung erhält, als jene des Stanz- bzw. Tiefziehloches,
gekennzeichnet durch
c) Einpressen der aus den Plattenanteilen (10, 11) durch a) und b) gebildeten Blechwarze in die Platteebene unter Freigabe eines für den Materialfluß erforderlichen Volumens auf der Stempelseite.

2. Verfahren nach Anspruch 1, dadurch gekennzeichnet, daß das Einpressen der Blechwarze am gleichen Arbeitsplatz erfolgt durch Ändern der Lage des Matritzen- (3) und des Stempelbodens (9) entgegen der Eindringrichtung.

3. Verfahren nach Anspruch 1, dadurch gekennzeichnet, daß das Einpressen der Blechwarze an einem nachfolgenden Arbeitsplatz durchgeführt wird mit einer die Blechwarze erfassenden Planierfläche (23), insbesondere mit einem Flachstempel.

4. Drückfüge-Vorrichtung zur Durchführung des Verfahrens nach Anspruch 2, mit einer in einer Presse angeordneten Matritze (2) und einem in Richtung Matritze (2) hin und her von der Presseneinrichtung angetriebenen Stempel (7), bei der für die Bearbeitung am gleichen Arbeitsplatz die Matritze (2) einen beweglichen Boden (3) aufweist, der zum Einpressen der Blechwarze bis zu der Stirnflächenebene der Matritze (2) verschiebbar ist, wobei zur Aufnahme des verdrängten Materials der Plattenanteile (10, 11) der Stempel (1) mit seinem Eintauchabschnitt (7) entsprechend rückstellbar ist, und mit einem der Platten (4) und (5) zugewandten Schulter (8) aufweisenden und um den Stempel (7) angeordneten Führungsteil (6), wobei der Formstempel (1) axial in Arbeitsrichtung geführt ist und beim Planieren die Schulter (8) auf den Platten (4, 5) zur Auflage kommt, dadurch gekennzeichnet, daß sich der Formstempel (1) über ein elastisches Material (17) rückseitig am Führungsteil (6) abstützt und das dieses elastische Material (17) erst beim Planieren nachgibt.

5. Drückfüge-Vorrichtung zur Durchführung des Verfahrens nach Anspruch 3 mit einer in einer Presse angeordneten Matritze (2) und einem in Richtung Matritze (2) und quer zu den zu verbindenen Platten (4, 5) von der Presseneinrichtung angetriebenen Fügestempel (1) zur Bildung einer Fügeverbindung an einem ersten Arbeitsplatz, dadurch gekennzeichnet, daß an einem zweiten Arbeitsplatz auf der Matritzenseite ein flacher Planierstempel (23) mit die durch das Fügen gebildeten Blechwarze überdeckenden Abmessungen vorhanden ist, der bis zu der ihm zugewandten Plattenebene zum Planieren verschiebbar ist, daß auf der Stempelseite ein Kalibrierstempel (21) als Gegenlager angeordnet ist, mit im Vergleich zum Fügestempel (1) kürzerem Arbeitszapfen (22) und daß eine Einspanneinrichtung (24, 25) für die Platten vorhanden ist, in der der Planierstempel (23) und der Kalibrierstempel (21) geführt sind.

6. Vorrichtung nach Anspruch 5, dadurch gekennzeichnet, daß der Kalibrierstempel (21) durch den gegenüber dem Führungsschaft im Durchmesser kleineren Arbeitszapfen (22) stufenförmig ausgebildet ist und daß die Stufenschulter mit dem Kalibrierzapfen (22) das Widerlager zum Planierstempel (23) bildet.

7. Vorrichtung nach Anspruch 5 oder 6, dadurch gekennzeichnet, daß die Abmessungen der einander zugewandten Stirnflächen von Kalibrierstempel (21) zusätzlich Arbeitszapfen (22) einerseits und Planierstempel (23) andererseits gleich groß sind.

## Claims

1. Process for joining thin sheets (4, 5) of formable materials lying on top of one another, in particular sheet metal, in which parts (10, 11) of the plates lying flat on top of one another are subjected to the following process steps in order to form a joint element:
a) partial stamp paring and/or deep-drawing of the plate parts (10, 11) from the sheet level by means of a plunger (1) and a matrix (2) until the plunger (1) has penetrated at least the first sheet (5) and at most the last sheet (4) from the entry side;
b) squeezing the sheet parts (10, 11) with at least the surface facing towards the plunger (1) of one of the sheet parts (11) being squashed flat and thus taking on a greater cross-sectional dimension than that of the plunger or deep-draw hole;
characterised by
c) impressing the sheet studs formed from the sheet parts (10,11) formed by a) and b) into the sheet level, releasing a volume onto the plunger side necessary for the material flow.

2. Process along the lines of Claim 1, characterised by the pressing of the sheet studs being done at the same working position by changing the position of the bases of the matrices (3) and the plunger (9) in the opposite direction to the penetration.

3. Process along the lines of Claim 1, characterised by the pressing of the sheet studs being done at a subsequent working position with a smoothing surface (23), in particular a flat plunger, taking hold of the sheet studs.

4. A pressure joint device for carrying out the process along the lines of Claim 2, with a matrix (2) arranged in one of the presses and a plunger (7) driven to and fro by the press equipment in the direction of the matrix (2), in which the matrix (2) has a movable base (3) for carrying out the process at the same working position which can be relocated for pressing in the sheet stud as far as the level of the short side of the matrix (2), with the plunger (1) at its immersion section (7) being capable of being reset accordingly to accept the ejected material from the sheet parts (10, 11), and with a shoulder (8) facing towards the sheets (4) and (5) and a guide part (6) arranged axially around the plunger (7) in the working direction and being set down on the sheets (4, 5) when the shoulder (8) is being smoothed, characterised by the plunger (1) being supported on the rear side with elastic material (17) against the guide part (6), and by this elastic material (17) only yielding when smoothing starts.

5. A pressure joint device for carrying out the process along the lines of Claim 3, with a matrix (2) arranged in a press and with a joining plunger (1) driven by the press equipment for forming a join at a first working position, characterised by a flat smoothing plunger (23), with dimensions covering the sheet studs formed by the joining, which can be moved as far as the sheet level facing towards it for smoothing, by a calibrating stamp (21) on the plunger side as an abutment, with a shorter working gudgeon in comparison with the joining plunger (1), and by a clamping device (24, 25) for the plates in which the smoothing plunger (23) and the calibrating plunger (21) are held.

6. A device along the lines of Claim 5, characterised by the calibrating die (21) being shaped in stages by the working gudgeon (22) opposite the guide shaft with the smaller diameter, and the staged shoulder with the calibration gudgeon (22) forming the abutment for the smoothing plunger (23).

7. A device along the lines of Claim 5 or 6, characterised by the dimensions of the short faces of the calibration plunger (21) facing towards one another and also the working gudgeons (22) on the one side and the smoothing plunger (23) on the other being of equal size.

## Revendications

1. Procédé permettant d'assembler des plaques (4, 5) minces placées les unes sur les autres, en matière déformable, notamment en tôle dont des portions (10, 11) posées à plat les unes sur les autres sont soumises aux étapes suivantes en vue de la constitution d'un élément jointif:
a) (Le découpage et/ou) L'emboutissage des portions de plaques (10, 11) provenant du plan des plaques, a l'aide d'un poinçon (1) et d'une matrice (2) jusqu'à ce que, du côté pénétration, le poinçon (1) ait traversé au moins la première plaque (5) et tout au plus la dernière (4),
b) Ecrasement des portions de plaques (10, 11) étant entendu qu'au moins la surface orientée vers le poinçon (1) de l'une des portions de plaques (11) est écrasée de sorte à être élargie, se trouvant ainsi dotée d'une dimension transversale supérieure à celle du trou poinçonné ou embouti,
caractérisé par
c) l'insertion par pressage dans le plan des plaques du bouton de tôle constitué dans les portions de plaques (10, 11) sous l'effet de a) et de b) en libérant un volume nécessaire pour le flux de matière sur le côté du poinçon.

2. Procédé conforme à la revendication 1 caractérisé par le fait que l'insertion par pressage du bouton de tôle au même poste de travail a lieu en modifiant la position de l'empreinte rapportée de la matrice (3) et de celle du poinçon (9) dans le sens inverse de la pénétration.

3. Procédé conforme à la revendication 1 caractérisé par le fait que l'insertion par pressage du bouton de tôle est réalisé au poste de travail suivant avec une surface de planage (23) embrassant le bouton de tôle, notamment avec un poinçon plat.

4. Dispositif à jointer par emboutissage autorisant la réalisation du procédé conformément à la revendication 2 avec une matrice (2) disposée dans une presse et un poinçon (7) entraîné par la presse dans un mouvement de va-et-vient en direction de la matrice (2), presse sur laquelle la matrice (2) pour l'usinage au même poste de travail présente un fond (3) mobile qui, pour l'insertion par pressage du bouton de tôle, peut être déplacé jusqu'au niveau de la face frontale de la matrice étant entendu que pour recueillir la matière délogée des portions de plaques (10, 11), le poinçon (1) avec son tronçon enfoncé (7) peut être remis en conséquence à sa place initiale, et avec une pièce de guidage (6) présentant un épaulement tourné vers les plaques (4) et (5) et disposée autour du poinçon (7) étant entendu que le poinçon de formage (1) est guidé axialement dans le sens du travail et que lors du planage, l'épaulement (8) prend appui sur les plaques (4, 5), caractérisé par le fait que le poinçon de formage (1) s'appuie à l'arrière sur la pièce de guidage (6) par l'intermédiaire d'une matière élastique (17) et que cette même matière élastique (17) ne cède qu'au moment du planage.

5. Dispositif à jointer par emboutissage autorisant la réalisation du procédé conformément à la revendication 3 avec une matrice (2) disposée dans une presse et un poinçon de jointage (1) entraîné par la presse en direction de la matrice (2) et transversalement aux plaques (4, 5) à assembler en vue de constituer un assemblage par jointage à un premier poste de travail, caractérisé par le fait qu'au second poste de travail, on dispose côté matrice d'un poinçon de planage (23) plat présentant des dimensions couvrant le bouton de tôle formé à la suite du jointage, poinçon qui est déplaçable pour le planage jusqu'au plan de la plaque tourné vers lui, par le fait aussi qu'un poinçon de calibrage (21) faisant fonction de butée est aménagé côté poinçon lequel est doté d'un tourillon de travail (22) plus court comparé au poinçon de jointage (1) et enfin par le fait qu'il existe un dispositif de serrage (24, 25) pour les plaques dans lequel sont guidés le poinçon de planage (23) et le poinçon de calibrage (21).

6. Dispositif conforme à la revendication 5 caractérisé par le fait que le poinçon de calibrage (21) présente une configuration à gradins compte tenu du tourillon de travail (22) d'un diamètre plus petit comparé à la tige de guidage et par le fait que l'épaulement étagé avec le tourillon de calibrage (22) forme la butée du poinçon de planage (23).

7. Dispositif conforme à la revendication 5 ou 6 caractérisé par le fait que les dimensions des faces frontales du poinçon de calibrage (21) tournées les unes vers les autres en plus du tourillon de travail (22) d'un côté et du poinçon de planage (23) de l'autre sont les mêmes.
